# EUROPÄISCHE PATENTSCHRIFT

(11) **EP 2 563 590 B1**
(45) Veröffentlichungstag und Bekanntmachung des Hinweises auf die Patenterteilung: **21.05.2014**
(21) Anmeldenummer: 11717255.1
(22) Anmeldetag: 27.04.2011
(51) Int. Cl.: B32B 15/08, B32B 15/18, B32B 15/20, B32B 27/18, B32B 27/28, F16C 33/44, F16C 33/20

(54) **GLEITLAGERVERBUNDWERKSTOFF UND HIERAUS HERGESTELLTES GLEITLAGER**
SLIDING BEARING COMPOSITE MATERIAL AND SLIDING BEARING PRODUCED THEREFROM
MATÉRIAU COMPOSITE POUR PALIER LISSE, ET PALIER LISSE PRODUIT EN CE COMPOSÉ

(30) Priorität: 27.04.2010 DE 102010018328
(43) Veröffentlichungstag der Anmeldung: 06.03.2013
(73) Patentinhaber: KS Gleitlager GmbH, 68789 St. Leon-Rot (DE)
(72) Erfinder: TAIPALUS, Riitta, 67117 Limburgerhof (DE); REINICKE, Rolf, 76669 Bad Schönborn (DE); PASTERNAK, Axel, 76669 Bad Schönborn (DE); WITT, Mario, 69120 Heidelberg (DE)
(74) Vertreter: DREISS Patentanwälte PartG mbB
(86) Internationale Anmeldenummer: PCT/EP2011/056626
(87) Internationale Veröffentlichungsnummer: WO 2011/134981

(56) Entgegenhaltungen:
- EP-A2- 1 892 429
- WO-A1-02/092239
- WO-A2-03/027522
- DE-A1-102008 046 817
- DE-A1-102008 060 765
- DE-B3-102010 011 083

## Beschreibung

Die Erfindung betrifft einen Gleitlagerverbundwerkstoff mit einer Stützschicht, insbesondere aus Stahl oder Bronze, einer darauf aufgebrachten porösen Gleitschicht, insbesondere aus Bronze, und einem in die Poren der Gleitschicht einimprägnierten Gleitschichtmaterial auf Fluorpolymerbasis mit die tribologischen Eigenschaften verbessernden Füllstoffen. Die Erfindung betrifft ferner ein hieraus hergestelltes Gleitlager, insbesondere in Form einer Gleitlagerschale oder Gleitlagerbuchse, insbesondere Buchse, Bundbuchse oder Anlaufscheibe, welches insbesondere durch einen Stanzprozess oder einen Biegerollprozess aus dem als Flachmaterial bereitgestellten Gleitlagerverbundwerkstoff herstellbar ist.

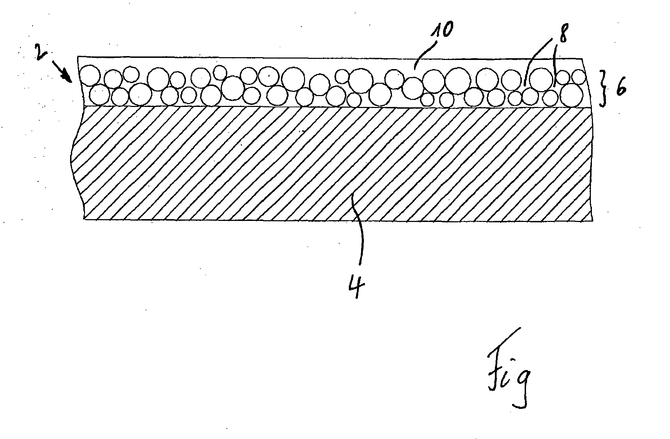

Typische dreischichtige Gleitlagerverbundwerkstoffe der hier in Rede stehenden Art haben eine Stützschicht, die häufig auch als Lagerrücken bezeichnet wird, aus Stahl oder Bronze mit einer Dicke von 0,25 bis 3,5 mm, auf welche die Gleitschicht porös aufgesintert ist, so dass eine dreidimensional poröse offenporige Trägerschicht für das Gleitschichtmaterial auf Kunststoffbasis resultiert, so wie dies auch in Figur 1 dargestellt ist. Das Gleitschichtmaterial auf Kunststoffbasis kann dann insbesondere als Folie, Paste oder Pulver auf die poröse Gleit- oder Trägerschicht aufgebracht werden und in den Poren dieser Gleit- oder Trägerschicht verankert werden, wobei durch das Gleitschichtmaterial ein dem Einlauf dienender Überstand in Z-Richtung über die dreidimensional poröse Gleit- oder Trägerschicht gebildet wird. Bei den erwähnten, die tribologischen Eigenschaften verbessernden Füllstoffen handelt es sich typischerweise um Festschmierstoffe und um Verstärkungsstoffe, insbesondere in Faserform, welche das Reib- und Verschleißverhalten des Gleitlagerverbundwerkstoffs und eines hieraus hergestellten Gleitlagers optimieren.

Als Basis des polymeren Gleitschichtmaterials haben sich Fluorpolymere wegen ihres günstigen Reibverhaltens als besonders geeignet erwiesen, die insbesondere und typischerweise zusammen mit anderen Festschmierstoffen innerhalb der Kunststoffmatrix auf Fluorpolymerbasis zum Einsatz kommen.

EP 1 892 429 offenbart einen nicht gattungsgemäßen Gleitlagerverbundwerkstoff, mit einer metallischen Stützschicht aus Stahl, mit einer darauf angeordneten massiv metallischen Lagermetallschicht auf Aluminium- oder Kupferbasis, worauf eine zweischichtige dünne polymere Laufschicht mit Hartstoffen und Festschmierstoffen als Füllstoffe aufgebracht ist. Einige Ausführungsbeispiele umfassen hexagonales Bornitrid.

Die vorliegende Erfindung befasst sich mit der Verbesserung eingangs genannter Gleitlagerverbundwerkstoffe im Hinblick auf besonders kritische Anwendungen, z. B. zur Lagerung eines Zweimassenschwungrades im Kupplungsbereich eines Kraftfahrzeugs. Es wurde nämlich festgestellt, dass bei solchen kritischen Anwendungen der Verschleißfestigkeit des Gleitschichtmaterials im Einlaufbetrieb des Gleitlagers eine besondere Bedeutung zukommt, die auch eine Auswirkung auf den späteren Dauerbetrieb des Gleitlagers hat, wenn die Plateaus der dreidimensional porösen metallischen Gleitschicht den Gleitpartner tragen. Der vorliegenden Erfindung liegt daher die Aufgabe zugrunde, die Verschleißfestigkeit des Kunststoffgleitschichtmaterials und der hieraus gebildeten Einlaufschicht des Verbundwerkstoffs bzw. Gleitlagers zu verbessern.

Diese Aufgabe wird bei einem Gleitlagerverbundwerkstoff der eingangs genannten Art erfindungsgemäß dadurch gelöst, dass hexagonales Bornitrid zu 5-25 Vol.-% und Mischphasenoxidpigmente zu 1-15 Vol.-% als Füllstoffe und 60 -94 Vol.-% Fluorpolymer in dem Gleitschichtmaterial enthalten sind.

Es wurde erfindungsgemäß erkannt, dass sich hexagonales Bornitrid im Zusammenwirken mit Mischphasenoxidpigmenten in einer Kunststoffmatrix auf Fluorpolymerbasis in besonderem Maße eignen. Ein derartiges Gleitschichtmaterial zeichnet sich durch einen sehr geringen Verschleiß und niedrigen Reibwert im Trockenlauf unter standardisierten Testbedingungen aus. Die Anmelderin hat erkannt, dass die Zugabe von Mischphasenoxidpigment zu einer hexagonales Bornitrid enthaltenden Fluorpolymermatrix zu einer wesentlichen Reduzierung des bei der Kunststoffgleitschicht auftretenden Verschleißes des Gleitlagerverbundwerkstoffs bzw. eines hieraus hergestellten Gleitlagers führt, und zwar ohne dass dies mit einem Anstieg des Reibwerts verbunden wäre. Durch seine graphitähnliche Kristallstruktur hat hexagonales Bornitrid eine ausgeprägte Schmierfähigkeit, ist also als Schmierstoff gut geeignet. Ein weiterer Vorteil von Bornitrid in Gleitlageranwendungen ist dessen niedrige Mohs-Härte von 2. Bornitrid besitzt eine gute Wärmeleitfähigkeit und kann damit im Werkstoffverbund die Reibwärme ableiten. Zwar wurde in EP

8 321 55 B1 bereits die Verwendung von hexagonalem Bornitrid zusätzlich oder als Alternative zu Bleioxid, Metallsulfiden mit Schichtstruktur, Metallfluoriden, Graphit, Ruß und/oder Koks und in Kombination mit Eisenoxid und PTFE als Fluorpolymer genannt. Ein Hinweis auf Mischphasenoxidpigmente der hier in Rede stehenden Art und deren vorteilhafte Eigenschaften gerade im Zusammenwirken mit Bornitrid ist jedoch nicht ersichtlich.

Bei den hier in Rede stehenden Mischphasenoxidpigmenten handelt es sich nicht um Pigmentmischungen, sondern gewissermaßen um feste Lösungen von Metallen in Metalloxidverbindungen bestimmter Stöchiometrie, wobei diese Pigmente eine geringe Partikelgröße bis höchstens einige µm aufweisen. Diese Pigmente werden hergestellt, indem Mischungen von Metalloxiden und/oder Oxidprecursorn, wie Metallsalze, Metallhydrate oder Metallkarbonate, in Luft stark erhitzt werden, und zwar auf Temperaturen von typischerweise 615°C bis 1300°C (sogenannte Kalzinierungstemperatur). Im unteren Bereich dieses Temperaturintervalls zersetzen sich die Bestandteile in Metalloxide. Bei höheren Temperaturen wird dieser Mix aus Oxiden reaktiv. Metallionen und Oxidionen werden beweglich und diffundieren innerhalb des Partikels und bilden in der Folge einen homogenen Festkörper, innerhalb dessen sich die Ionen in einer stabilen kristallinen Struktur anordnen, die durch das Metall und das Verhältnis des Oxidanteils zum Metallanteil, aber auch durch die Behandlungstemperatur bestimmt wird. Die so erhaltenen Festkörper werden anschließend typischerweise auf ihre geringe Partikelgröße gemahlen.

Als Fluorpolymerbasis kommt z.B. PTFE, PFA, FEP, ETFE, PVDF und deren Mischungen in Frage. Es erweist sich vorliegend als besonders vorteilhaft, wenn die Fluorpolymerbasis PTFE umfasst und insbesondere von PTFE als matrixbildendem Fluorpolymer gebildet ist. Von einer Fluorpolymerbasis wird auch dann gesprochen, wenn die polymere Komponente des Gleitschichtmaterials neben Fluorpolymeren noch andere Polymere bis zu 20 Vol.-%, insbesondere bis zu 15 Vol.-%, insbesondere bis zu 10 Vol.-% und vorzugsweise nur bis zu 5 Vol.-% (bezogen auf die polymere Komponente) umfasst, etwa EPE, PA, PI, PEEK, PPS, PPA. In entsprechender Weise wird von einer PTFE-Basis gesprochen, wenn die polymere Komponente des Gleitschichtmaterials neben PTFE noch insgesamt bis zu 20 Vol.-%, insbesondere bis zu 15 Vol.-%, insbesondere bis zu 10 Vol.-% und vorzugsweise nur bis zu 5 Vol.-% (prozentualer Anteil wieder bezogen auf den Polymerteil des Gleitschichtmaterials) andere Polymere, wie z.B. PFA, FEP, ETFE, EPE, PVDF, PA, PI, PEEK, PPS, PPA umfasst.

Wie vorausgehend schon erwähnt, liegt die Partikelgröße der Mischphasenoxidpigmente im Bereich bis höchstens einiger µm. Es erweist sich als vorteilhaft, wenn eine mittlere Partikelgröße der Mischphasenoxidpigmente in Form des D50-Werts der Partikelgröße 0,05 - 3 µm, insbesondere 0,1 - 3 µm, insbesondere 0,1 - 2,5 µm, insbesondere 0,1 - 2,0 µm, insbesondere 0,2 - 2,0 µm, insbesondere 0,3 - 2,0 µm beträgt. Aufgrund der geringen Partikelgröße wird auch bei einem verhältnismäßig geringen volumenprozentualen Anteil der Mischphasenoxidpigmente eine dreidimensional dichte Struktur oder Verteilung der Pigmentpartikel erzielt, d. h. infolge der geringen Partikelgröße der Pigmente finden sich quasi in jedem noch so kleinen Volumen des Gleitschichtmaterials Pigmentpartikel, welche im Zusammenwirken mit hexagonalem Bornitrid und Fluorpolymermaterial zu einer Verschleißminderung führen. Es wird vermutet, dass die geringe Partikelgröße der Pigmente zur Beibehaltung eines hervorragenden Reibwerts beitragen, wobei sie dennoch den Verschleißwiderstand in der Einlaufphase und im Dauerbetrieb erhöhen.

Die Partikelgröße der Mischphasenoxidpigmente kann insbesondere durch Laserbeugung nach ISO 13320, insbesondere und vorzugsweise unter Verwendung einer Messgeräteserie CILAS Granulometer, insbesondere CILAS HR 850 Von Cilas Alcatel bestimmt werden.

Als besonders vorteilhaft haben sich Mischphasenoxidpigmente mit Kobalt-Aluminium, Chrom-Antimon-Titan, Kobalt-Titan, Eisen-Aluminium oder Kobalt-Chrom als Metallkomponente erwiesen.

Entsprechend ihrem stöchiometrischen Sauerstoffgehalt kristallisieren die Mischphasenoxidpigmente in der Spinellstruktur oder in der Rutilenstruktur oder in der Hämatitstruktur.

Die spezifische Oberfläche (BET) der Mischphasenoxidpigmente liegt in bevorzugter Weise über 1 m²/g, insbesondere über 3 m²/g, insbesondere über 5 m²/g und weiter insbesondere über 10 m²/g. Sie können daher verglichen mit anderen Füllstoffen als sehr oberflächenaktiv in tribologischer Hinsicht bezeichnet werden.

Die Anmelderin hat des Weiteren festgestellt, dass ein optimierter Gleitlagerverbundwerkstoff erhalten werden kann, wenn das hexagonale Bornitrid aus einer Mischung zweier Partikelgrößenfraktionen gebildet ist, wobei die eine erste Fraktion eine mittlere Partikelgröße zwischen 0,7 bis 7 µm und die andere zweite Fraktion eine mittlere Partikelgröße < 0,2 µm, insbesondere < 0,1 µm aufweist. Der gewichtsprozentuale Anteils der ersten Fraktion beträgt vorzugsweise 50 - 97 Gew.-%, insbesondere 75 - 97 Gew.-% des gesamten Bornitrids (erste + zweite Fraktion). Der gewichtsprozentuale Anteil der zweiten kleineren Fraktion beträgt dementsprechend 3 - 50 Gew.-%, insbesondere 3 - 25 Gew.-%.

Weiter erweist es sich als vorteilhaft, wenn die Dicke der dreidimensional porösen Gleit- oder Trägerschicht etwa 0,20 bis 0,40 mm beträgt. Ihre Porosität liegt vorteilhafterweise zwischen 25 und 65 %.

Der Überstand des Gleitschichtmaterials über eine Oberseite der dreidimensional porösen Gleitschicht beträgt vorzugsweise 3 - 300 µm. Sofern der Überstand des Gleitschichtmaterials als Einlaufschicht dienen soll, beträgt er vorzugsweise 3 - 50 µm, insbesondere 3 - 30 µm. Sofern das Gleitschichtmaterial als Laufschicht dienen soll, und insbesondere auf Basis eines lasttragenden Fluorpolymers beruht oder die auftretenden Belastungen eher gering sind, so dass das Gleitschichtmaterial nicht abgetragen wird, so kann der Überstand des Gleitschichtmaterials vorzugsweise 30 - 300 µm betragen.

Weitere Merkmale, Einzelheiten und Vorteile der Erfindung ergeben sich aus den beigefügten Patentansprüchen und aus der nachfolgenden Beschreibung bevorzugter Ausführungsformen der Erfindung. In der Zeichnung zeigt:

Die Figur einen Gleitlagerverbundwerkstoff in schematischer Schnittansicht.

Die Figur zeigt einen Gleitlagerverbundwerkstoff 2 mit einer Stützschicht 4 aus Stahl oder Bronze und mit einer darauf dreidimensional porös aufgesinterten Gleit- oder Trägerschicht 6, insbesondere aus Bronze. Die Gleitschicht 6 umfasst Poren 8, die 25 bis 65 % des Volumens der Gleitschicht 6 ausmachen. In diese Poren 8 ist ein Gleitschichtmaterial 10 auf Kunststoffbasis, nämlich auf Fluorpolymerbasis, vorzugsweise mit PTFE als matrixbildender Fluorpolymerkomponente, einimprägniert, wobei das Gleitschichtmaterial 10 die Oberseite der dreidimensional porösen Gleit- oder Trägerschicht 6 ganz überdeckt und dort einen Überstand von ca. 3 - 300 µm bildet. Im Falle von PTFE als matrixbildender Fluorpolymerkomponente beträgt der Überstand bei typischen Anwendungen zur Bildung einer Einlaufschicht vorzugsweise 3 - 50 µm. Neben der Fluorpolymerkomponente, vorzugsweise in Form von PTFE, umfasst das Gleitschichtmaterial 10 Füllstoffe, und zwar 5 bis 25 Vol.-% hexagonales Bornitrid und 1 bis 15 Vol.-% Mischphasenoxidpigmente (volumenprozentuale Angaben bezogen auf das Gleitschichtmaterial 10).

Die Anmelderin hat Vergleichsversuche angestellt und den Verschleiß eines Gleitlagerverbundwerkstoffs in Buchsenform mit Innendurchmesser 42 mm und Buchsenbreite zwischen 10 und 20 mm gegen eine Stahlwelle aus Wälzlagerstahl 100Cr6 als Gleitpartner untersucht, wobei die Zusammensetzung des Gleitschichtmaterials hinsichtlich seiner Füllstoffe variiert wurde. Die Belastung des buchsenförmigen Gleitlagerverbundwerkstoffs betrug 4 MPa. Es wurde eine oszillierende Verschwenkbewegung der Welle um +/- 45° mit 4 Hz während einer Dauer von 20 h ausgeführt. Es wird auf die nachfolgend wiedergegebene Tabelle verwiesen. Man erkennt, dass der Verschleiß des Gleitschichtmaterials mit Bornitrid als alleinigem Füllstoff deutlich höher ist als bei einem Gleitschichtmaterial, das zusätzlich ein Mischphasenoxidpigment als weiteren Füllstoff aufweist.

Als besonders bevorzugt erscheint Co-Al als Mischphasenoxidpigment, und zwar mit einem Anteil von 2 bis 12, insbesondere 2 bis 10 Vol.-% am Gleitschichtmaterial.

**Tabelle 1**

| Nummer | Bornitrid [Vol.-%] | Pigmenanteil [Vol.-%] | Pigmenttyp | Verschleiß [µm] |
|---|---|---|---|---|
| 1 | 10 | 0 | - | 40,5 |
| 2 | 0 | 10 | Co-Al | 29 |
| 3 | 10 | 3 | Co-Al | 29 |
| 4 | 10 | 3 | Fe-Al | 17 |
| 5 | 10 | 3 | Cr-Sb-Ti | 23 |
| 6 | 10 | 10 | Co-Al | 22 |
| 7 | 10 | 10 | Co-Cr | 29 |
| 8 | 19 | 3 | Co-Al | 16 |
| 9 | 19 | 6 | Co-Al | 19 |
| | | | | |

## Patentansprüche

1. Gleitlagerverbundwerkstoff (2) mit einer Stützschicht (4), insbesondere aus Stahl oder Bronze, einer darauf aufgebrachten porösen Gleitschicht (6), insbesondere aus Bronze, und einem in die Poren (8) der Gleitschicht einimprägnierten Gleitschichtmaterial (10) auf Fluorpolymerbasis mit die tribologischen Eigenschaften verbessernden Füllstoffen, **dadurch gekennzeichnet, dass** hexagonales Bornitrid zu 5 - 25 Vol.-% und Mischphasenoxidpigmente zu 1 - 15 Vol.-% als Füllstoffe und 60 - 94 Vol.-% Fluorpolymer in dem Gleitschichtmaterial (10) enthalten sind.

2. Gleitlagerverbundwerkstoff nach Anspruch 1, **dadurch gekennzeichnet, dass** hexagonales Bornitrid zu 10 - 25 Vol.-%, insbesondere zu 15 - 25 Vol.% in dem Gleitschichtmaterial (10) enthalten ist.

3. Gleitlagerverbundwerkstoff nach Anspruch 1 oder 2, **dadurch gekennzeichnet, dass** Mischphasenoxidpigmente zu 1 - 12 Vol.-%, insbesondere zu 1 - 10 Vol.-% in dem Gleitschichtmaterial (10) enthalten sind.

4. Gleitlagerverbundwerkstoff nach Anspruch 1, 2 oder 3, **dadurch gekennzeichnet, dass** die Fluorpolymerbasis PTFE umfasst, insbesondere von PTFE gebildet ist.

5. Gleitlagerverbundwerkstoff nach einem oder mehreren der vorstehenden Ansprüche, **dadurch gekennzeichnet, dass** eine mittlere Partikelgröße der Mischphasenoxidpigmente in Form des D50-Werts der Partikelgröße 0,05 - 3 µm, insbesondere 0,1 - 3 µm, insbesondere 0,1 - 2,5 µm, insbesondere 0,1 - 2,0 µm, insbesondere 0,2 - 2,0 µm, insbesondere 0,3 - 2,0 µm beträgt.

6. Gleitlagerverbundwerkstoff nach einem oder mehreren der vorstehenden Ansprüche, **dadurch gekennzeichnet, dass** als Mischphasenoxidpigmente Co-Al, Cr-Sb-Ti, Co-Ti, Fe-Al oder Co-Cr enthalten sind.

7. Gleitlagerverbundwerkstoff nach einem oder mehreren der vorstehenden Ansprüche, **dadurch gekennzeichnet, dass** die Mischphasenoxidpigmente in der Spinellstruktur oder in der Hämatitstruktur oder in der Rutilenstruktur kristallisiert sind.

8. Gleitlagerverbundwerkstoff nach einem oder mehreren der vorstehenden Ansprüche, **dadurch gekennzeichnet, dass** die spezifische Oberfläche der Mischphasenoxidpigmente > 1 m²/g, insbesondere > 3 m²/g, insbesondere > 5 m²/g, insbesondere > 10 m²/g liegt.

9. Gleitlagerverbundwerkstoff nach einem oder mehreren der vorstehenden Ansprüche, **dadurch gekennzeichnet, dass** die Dicke der porösen Gleitschicht (6) 0,20 - 0,40 mm beträgt.

10. Gleitlagerverbundwerkstoff nach einem oder mehreren der vorstehenden Ansprüche, **dadurch gekennzeichnet, dass** die Porosität der Gleitschicht (6) 25 - 65 % beträgt.

11. Gleitlagerverbundwerkstoff nach einem oder mehreren der vorstehenden Ansprüche, **dadurch gekennzeichnet, dass** hexagonales Bornitrid mit einer mittleren Partikelgröße in Form des D50-Werts von 0,7 - 7 µm und/oder von < 0,2 µm, insbesondere < 0,1 µm enthalten ist.

12. Gleitlagerverbundwerkstoff nach Anspruch 11, **dadurch gekennzeichnet, dass** hexagonales Bornitrid mit einer mittleren Partikelgröße in Form des D50-Werts von 0,7 - 7 µm, zu 50 - 97 Gew.-%, insbesondere 50 - 75 Gew.-%, und hexagonales Bornitrid mit einer Partikelgröße von < 0,2 µm, insbesondere < 0,1 µm, zu 3 - 50 Gew.-%, insbesondere 3 - 25 Gew.-% enthalten ist.

13. Gleitlagerverbundwerkstoff nach einem oder mehreren der vorstehenden Ansprüche, **dadurch gekennzeichnet, dass** der Überstand des Gleitschichtmaterials (10) über eine Oberseite der dreidimensional porösen Gleitschicht (6) 3 - 300 µm beträgt.

14. Gleitlagerverbundwerkstoff nach Anspruch 13, **dadurch gekennzeichnet, dass** der Überstand des Gleitschichtmaterials (10) über eine Oberseite der dreidimensional porösen Gleitschicht (6) 3 - 50 µm, insbesondere 3 - 30 µm beträgt, oder dass der Überstand des Gleitschichtmaterials (10) über eine Oberseite der dreidimensional porösen Gleitschicht (6) 30 - 300 µm beträgt.

15. Gleitlager, insbesondere Gleitlagerschale oder -buchse oder Anlaufscheibe, hergestellt aus einem Gleitlagerverbundwerkstoff nach einem oder mehreren der vorstehenden Ansprüche.

## Claims

1. Sliding bearing composite material (2) comprising a support layer (4), in particular made of steel or bronze, a porous sliding layer (6) applied thereto, in particular made of bronze, and a sliding layer material (10) impregnated into the pores (8) of the sliding layer, wherein said sliding layer material is based on fluoropolymer comprising fillers that improve the tribological properties, **characterised in that** the sliding layer material (10) contains 5 - 25% by volume of hexagonal boron nitride and 1 - 15% by volume of mixed-phase oxide pigments as fillers and 60 - 94% by volume of fluoropolymer.

2. Sliding bearing composite material in accordance with claim 1, **characterised in that** the sliding layer material (10) contains 10 - 25% by volume, in particular 15 - 25% by volume of hexagonal boron nitride.

3. Sliding bearing composite material in accordance with claim 1 or 2, **characterised in that** the sliding layer material (10) contains 1 - 12% by volume, in particular 1 - 10% by volume of mixed-phase oxide pigments.

4. Sliding bearing composite material in accordance with claim 1, 2 or 3, **characterised in that** the fluoropolymer base includes PTFE, in particular is made of PTFE.

5. Sliding bearing composite material in accordance with one or more of the previous claims, **characterised in that** a mean particle size of the mixed-phase oxide pigments in the form of the D50 value of the particle size is 0.05 - 3 µm, in particular 0.1 - 3 µm, in particular 0.1 - 2.5 µm, in particular 0.1 - 2.0 µm, in particular 0.2 - 2.0 µm, in particular 0.3 - 2.0 µm.

6. Sliding bearing composite material in accordance with one or more of the previous claims, **characterised in that** Co-Al, Cr-Sb-Ti, Co-Ti, Fe-Al or Co-Cr are contained as mixed-phase oxide pigments.

7. Sliding bearing composite material in accordance with one or more of the previous claims, **characterised in that** the mixed-phase oxide pigments are crystallised in the spinel structure or in the haematite structure or in the rutile structure.

8. Sliding bearing composite material in accordance with one or more of the previous claims, **characterised in that** the specific upper surface of the mixed-phase oxide pigments is > 1 m²/g, in particular > 3 m²/g, in particular > 5 m²/g, in particular > 10 m²/g.

9. Sliding bearing composite material in accordance with one or more of the previous claims, **characterised in that** the thickness of the porous sliding layer (6) is 0.20 - 0.40 mm.

10. Sliding bearing composite material in accordance with one or more of the previous claims, **characterised in that** the porosity of the sliding layer (6) is 25 - 65 %.

11. Sliding bearing composite material in accordance with one or more of the previous claims, **characterised in that** hexagonal boron nitride is contained with a mean particle size in the form of the D50 value of 0.7 - 7 µm and/or of < 0.2 µm, in particular < 0.1 µm.

12. Sliding bearing composite material in accordance with claim 11, **characterised in that** hexagonal boron nitride is contained with a mean particle size in the form of the D50 value of 0.7 - 7 µm, at 50 - 97 % by weight, in particular 50 - 75 % by weight and hexagonal boron nitride with a particle size of < 0.2 µm, in particular < 0.1 µm, at 3 - 50 % by weight, in particular 3 - 25 % by weight.

13. Sliding bearing composite material in accordance with one or more of the previous claims, **characterised in that** the overhang of the sliding bearing material (10) beyond an upper side of the three dimensional porous sliding layer (6) is 3 - 300 µm.

14. Sliding bearing composite material in accordance with claim 13, **characterised in that** the overhang of the sliding bearing material (10) beyond an upper side of the three dimensional porous sliding layer (6) is 3 - 50 µm, in particular 3 - 30 µm, or that the overhang of the sliding bearing material (10) beyond an upper side of the three dimensional porous sliding layer (6) is 30 - 300 µm.

15. Sliding bearing, in particular sliding bearing shell or bushing or thrust washer, is made out of a sliding bearing composite material in accordance with one or more of the previous claims.

## Revendications

1. Matériau composite pour palier lisse (2) comprenant une couche de support (4), en particulier en acier ou en bronze, une couche de glissement poreuse (6) appliquée sur celle-ci, en particulier en bronze, et un matériau de couche de glissement (10) à base de polymère fluoré imprégnant les pores(8) de la couche de glissement, ainsi que des charges améliorant les propriétés tribologiques, **caractérisé en ce que** le matériau de couche de glissement (10) contient du nitrure de bore hexagonal pour 5 à 25 % en volume, 1 à 15 % de pigments d'oxyde phase mixte, en tant que charge, et 60 à 94 % en volume de polymère fluoré.

2. Matériau composite pour palier lisse selon la revendication 1, **caractérisé en ce que** le matériau de couche de glissement (10) contient du nitrure de bore hexagonal pour 10 à 25 % en volume, en particulier pour 15 à 25 % en volume.

3. Matériau composite pour palier lisse selon la revendication 1 ou 2, **caractérisé en ce que** le matériau de couche de glissement (10) contient des pigments d'oxyde phase mixte pour 1 à 12 % en volume, en particulier pour 1 à 10 % en volume

4. Matériau composite pour palier lisse selon la revendication 1, 2 ou 3, **caractérisé en ce que** le polymère fluoré comporte du PTFE, en particulier est réalisé en PTFE.

5. Matériau composite pour palier lisse selon l'une quelconque des revendications précédentes, **caractérisé en ce qu'**une taille de particule moyenne des pigments d'oxyde phases mixte, spécifiée comme la valeur D50 de la taille de particule, est dans la plage de 0,05 à 3 µm, en particulier de 0,1 à 3 µm, en particulier de 0,1 à 2,5 µm, en particulier de 0,1 à 2,0 µm, en particulier de 0,2 à 2,0 µm, en particulier de 0,3 à 2,0 µm.

6. Matériau composite pour palier lisse selon l'une quelconque des revendications précédentes, **caractérisé en ce que** sont inclus, comme pigments d'oxyde phase mixte, Co-Al, Cr-Sb-Ti, Co-Ti, Fe-Al ou Co-Cr.

7. Matériau composite pour palier lisse selon l'une quelconque des revendications précédentes, **caractérisé en ce que** les pigments d'oxyde phases mixte sont cristallisés en la structure de spinelle, dans la structure d'hématite ou dans la structure de rutile.

8. Matériau composite pour palier lisse selon l'une quelconque des revendications précédentes, **caractérisé en ce que** l'aire superficielle spécifique des pigments d'oxyde phase mixte est supérieure à 1 m²/g, en particulier supérieure à 3 m²/g, en particulier supérieure à 5 m²/g, en particulier supérieure à 10 m²/g.

9. Matériau composite pour palier lisse selon l'une quelconque des revendications précédentes, **caractérisé en ce que** l'épaisseur de la couche de glissement poreuse (6) est dans la plage de 0,20 à 0,40 mm.

10. Matériau composite pour palier lisse selon l'une quelconque des revendications précédentes, **caractérisé en ce que** la porosité de la couche de glissement poreuse (6) est dans la plage de 25 à 65 %.

11. Matériau composite pour palier lisse selon l'une quelconque des revendications précédentes, **caractérisé en ce que** la quantité du nitrure de bore hexagonal, avec une taille de particule moyenne spécifiée comme la valeur D50, est dans la plage de 0,7 à 7 µm et/ou est inférieure à 0,2 µm, en particulier inférieure à 0,1 µm.

12. Matériau composite pour palier lisse selon la revendication 11, **caractérisé en ce que** du nitrure de bore hexagonal, ayant une taille de particule moyenne spécifiée comme la valeur D50,dans la plage de 0,7 à 7 µm, est inclus en une quantité de 50 à 97 % en poids, en particulier de 50 à 75 % en poids, et du nitrure de bore hexagonal, ayant une taille de particule moyenne inférieure à 0,2 µm, en particulier inférieure à 0,1 µm, est inclus en une quantité de 3 à 50 % en poids, en particulier de 3 à 25 % en poids.

13. Matériau composite pour palier lisse selon l'une quelconque des revendications précédentes, **caractérisé en ce que** le dépassement du matériau de couche de glissement (10) au-dessus de la surface supérieure de la couche de glissement poreuse tridimensionnelle (6) est dans la plage de 3 à 300 µm.

14. Matériau composite pour palier lisse selon la revendication 13, **caractérisé en ce que** le dépassement du matériau de couche de glissement (10) au-dessus d'une surface supérieure de la couche de glissement poreuse tridimensionnelle (6) est dans la plage de 3 à 50 µm, en particulier de 3 à 30 µm, ou **en ce que** le dépassement du matériau de couche de glissement (10) au-dessus d'une surface supérieure de la couche de glissement poreuse tridimensionnelle (6) est dans la plage de 30 à 300 µm.

15. Palier lisse, en particulier un coussinet ou une douille de palier lisse, ou palier à glissement, fabriqué à partir d'un matériau composite pour palier lisse selon une ou plusieurs des revendications précédentes.
